# FASCICULE DE BREVET EUROPEEN

(11) **EP 0 750 421 B1**
(45) Date de publication et mention de la délivrance du brevet: **02.04.2003**
(21) Numéro de dépôt: 96401244.7
(22) Date de dépôt: 10.06.1996
(51) Int. Cl.: H04N 5/50, H04N 5/46

(54) **Procédé pour le stockage de données numériques d'accord, circuit, téléviseur et magnétoscope pour la mise en oeuvre d'un tel procédé**
Verfahren zum Speichern von digitalen Abstimmdaten, Schaltung, Fernsehgerät und magnetischer Videorecorder zur Durchführung des Verfahrens
Method for the storage of digital tuning data, circuit, television receiver and magnetic video recorder for implementing the same

(30) Priorité: 12.06.1995 FR 9506905
(43) Date de publication de la demande: 27.12.1996
(73) Titulaire: THOMSON multimedia, 92648 Boulogne Cédex (FR)
(72) Inventeur: Tazine, Nour-Eddine, 92050 Paris la Defense Cedex (FR); Nguyen, Jino, 92050 Paris la Defense Cedex (FR); Maetz, Yves, 92050 Paris la Defense Cedex (FR)
(74) Mandataire: Ruellan-Lemonnier, Brigitte

(56) Documents cités:
- EP-A- 0 453 937
- EP-A- 0 512 618
- EP-A- 0 529 340
- DE-A- 3 037 196
- FR-A- 2 592 543
- FR-A- 2 602 930
- GB-A- 2 256 333
- US-A- 5 087 977
- US-A- 5 371 550

## Description

La présente invention se rapporte au domaine des récepteurs de télévision et des magnétoscopes. Il est habituel que de tels appareils comportent des moyens pour la mémorisation des paramètres relatifs à une pluralité de stations. Cette mémorisation s'effectuait dans le passé par des moyens mécaniques peu accessibles par des utilisateurs peu expérimentés.

On a proposé dans l'état de la technique de simplifier la phase de mémorisation des stations par le balayage automatique des plages de fréquence, successivement avec une première valeur du premier paramètre (par exemple PAL), puis un nouveau balayage de cette plage de fréquence avec une deuxième valeur du même paramètre. Pour chaque syntonisation, l'opérateur doit en outre procéder à des actions complémentaires pour provoquer l'enregistrement définitif des données relatives à une station.

Un tel procédé est lent et présente des possibilités d'erreurs rendant nécessaires une réinitialisation complète de la mémoire.

Le document DE 30 37 196 C1 concerne un récepteur de télévision mettant en oeuvre un procédé de recherche de signaux de télévision multistandard, avec recherche standard par standard.

L'objet de la présente invention est de remédier à ces inconvénients en proposant un procédé simplifiant l'utilisation et garantissant une plus grande sécurité de la phase de mémorisation des stations.

A cet effet, l'invention concerne plus particulièrement un procédé selon la revendication 1.

Avantageusement, l'action sur la touche unique pendant la séquence de choix concernant le dernier des paramètres pour une fréquence donnée provoque la validation de la mémorisation de l'ensemble des paramètres relatifs à une station.

Selon une première variante, la mémorisation des stations s'effectue dans des emplacements s'incrémentant automatiquement.

Selon une deuxième variante, la mémorisation des stations s'effectue dans des emplacements choisis, à l'aide les touches de sélection de programmes.

L'invention concerne un téléviseur ou un magnétoscope selon la revendication 5.

L'invention sera mieux comprise dans ce qui suit, à la lecture de la description faisant référence aux dessins annexés où :

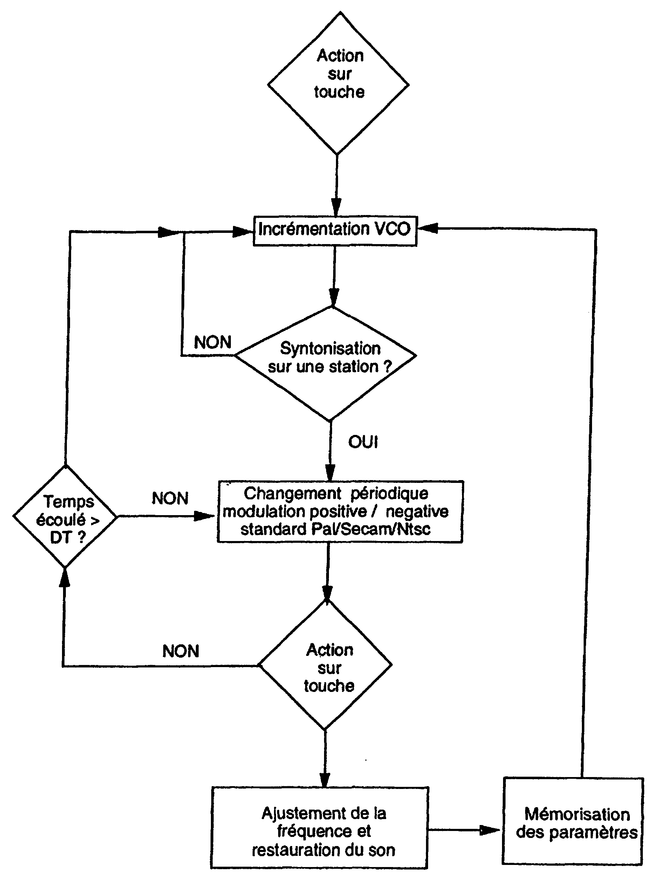

- la figure 1 représente l'organigramme du procédé selon l'invention.

La programmation du récepteur selon la procédé de l'invention fonctionne de la manière suivante :
le démarrage de la séquence de mémorisation s'effectue par une action sur une touche unique servant à l'ensemble du processus de mémorisation.

Le récepteur comporte de manière connue un démodulateur multistandard mettant en oeuvre un comparateur de phases recevant un signal provenant d'un oscillateur contrôlé en tension VCO (voltage controled Oscillator).

La tension de commande de cet oscillateur varie continûment jusqu'à la détection d'une émission. La détection d'un signal de réception d'une station active le changement -périodique de la modulation (positive et négative) et des différents standards possibles, NTSC, PAL ou SECAM, sous forme de changements successifs associants à chaque standards les deux polarités. L'opérateur appuie normalement sur la touche unique lorsqu'une image apparaît sur l'écran, ce qui conduit à la sélection de la modulation appropriée à la station en cours de sélection. A défaut d'une action sur la touche unique après un temps DT correspondant à quelques cycles de changements du type de modulation, le balayage des fréquences se poursuit automatiquement.

Lorsque la modulation appropriée est sélectionnée, le procédé consiste à proposer alternativement les différents standards possibles, NTSC, PAL ou SECAM, sous forme de changements successifs jusqu'à l'appui sur la touche unique, lorsque l'image apparaissant sur l'écran est exploitable. A défaut d'action sur la touche unique au bout d'un temps DT correspondant à quelques cycles de changements de standards, le balayage des fréquences se poursuit automatiquement.

La sélection d'une station se poursuit ensuite par l'ajustement de la fréquence et la restauration du son qui a été coupé pendant la phase de recherche. La mémorisation dans un emplacement de mémoire vide s'effectue automatiquement, ou par la sélection d'un emplacement par le clavier de sélection de chaîne.

Le cycle de sélection se poursuit ensuite jusqu'à ce que les emplacements de mémoires soient tous occupés, ou que la bande de fréquence soit entièrement balayée, ou encore que l'opérateur interrompe le processus.

La présente invention est décrite dans ce qui précède de façon non limitative. Il est bien évident que l'Homme de Métier sera à même de réaliser différentes variantes sans pour autant sortir du cadre de l'invention.

## Revendications

1. Procédé pour le stockage de données numériques d'accord et de paramètres relatifs à une pluralité de stations de télévision dans une mémoire reprogrammable pour l'accord d'appareils récepteurs de télévision, **caractérisé en ce qu'**il comporte les étapes de:
(a) suite à l'actionnement d'une touche, initialisation d'une recherche de stations par balayage de la plage de fréquence de réception;
(b) arrêt du balayage à une fréquence courante sur détection d'un signal de réception de station et exécution des étapes (c) à (e) pour au moins un paramètre de réception pour la station concernée:
(c) changement cyclique de la valeur du paramètre pendant un intervalle de temps donné (DT) ou jusqu'à actionnement de ladite touche;
(d) s'il y a eu actionnement de ladite touche durant l'intervalle de temps, mémorisation de la valeur du paramètre au moment de l'actionnement de la touche;
(e) s'il n'y a pas eu actionnement de ladite touche durant l'intervalle de temps, reprise le cas échéant du balayage de la plage de fréquences;
(f) retour à l'étape (b).

2. Procédé selon la revendication 1, **caractérisé en ce que** l'actionnement de la touche durant le choix de la valeur du dernier paramètre d'une station provoque la validation de la mémorisation de l'ensemble des paramètres relatifs à une station.

3. Procédé selon l'une des revendications 1 ou 2, **caractérisé en ce que** la mémorisation des paramètres relatifs à une station s'effectue dans des emplacements s'incrémentant automatiquement.

4. Procédé selon l'une des revendications 1 ou 2, **caractérisé en ce que** la mémorisation des paramètres relatifs à une station s'effectue dans un emplacement choisi à l'aide de touches de sélection de programmes.

5. Récepteur de télévision tel qu'un téléviseur ou un magnétoscope comportant une mémoire reprogrammable pour le stockage de paramètres de réception de stations de télévision et un circuit pour sélectionner des paramètres de réception à partir de cette mémoire, **caractérisé en ce qu'**il comporte une unique touche pour d'une part l'initialisation d'une recherche de stations de télévision par balayage de la plage de fréquences de réception et d'autre part la validation de valeurs d'au moins un paramètre relatif au signal d'une station lors d'un changement cyclique de la valeur du paramètre pendant une durée déterminée.

## Patentansprüche

1. Verfahren zur Speicherung von digitalen Abstimmdaten und von Parametern für mehrere Fernsehkanäle in einem umprogrammierbaren Speicher zur Abstimmung von Fernsehempfängern,
**gekennzeichnet durch** folgende Schritte:
(a) Auslösung einer Kanalsuche **durch** Abtastung des Bereichs von Empfangsfrequenzen aufgrund der Betätigung einer Taste,
(b) Anhalten der Abtastung bei einer laufenden Frequenz bei der Ermittlung eines Signals für einen Kanalempfang und Durchführung der Schritte (c) bis (e) für wenigstens einen Empfangsparameter für den betroffenen Kanal,
(c) zyklische Änderung des Wertes des Parameters während einer bestimmten Zeitperiode (DT) oder bis zur Betätigung der Taste,
(d) Speicherung des Wertes des Parameters im Zeitpunkt der Betätigung der Taste, wenn eine Betätigung der Taste während des Zeitintervalls erfolgt ist,
(e) gegebenenfalls Wiederaufnahme der Abtastung des Frequenzbereichs, wenn während des Zeitintervalls keine Betätigung der Taste erfolgt ist,
(f) Rückkehr zum Schritt (b).

2. Verfahren nach Anspruch 1, **dadurch gekennzeichnet, dass** die Betätigung der Taste während der Wahl des Wertes des letzten Parameters eines Kanals die Gültigkeitserklärung der Speicherung aller Parameter für einen Kanal bewirkt.

3. Verfahren nach einem der Ansprüche 1 oder 2, **dadurch gekennzeichnet, dass** die Speicherung der Parameter für einen Kanal in Speicherplätzen erfolgt, die automatisch inkrementiert werden.

4. Verfahren nach einem der Ansprüche 1 oder 2, **dadurch gekennzeichnet, dass** die Speicherung der Parameter für einen Kanal in einem Speicherplatz erfolgt, der mittels Programmwahltasten gewählt wird.

5. Fernsehgerät, wie ein Fernsehempfänger oder ein Videorekorder mit einem umprogrammierbaren Speicher für die Speicherung von Parametern für den Empfang von Fernsehkanälen und einer Schaltung zur Wahl von Empfangsparametem aus diesem Speicher, **dadurch gekennzeichnet, dass** es eine einzige Taste enthält, einerseits für die Auslösung einer Suche nach Fernsehkanälen durch Abtastung des Empfangsfrequenzbereichs und andererseits für die Gültigkeitserklärung von Werten wenigstens eines Parameters für das Signal eines Kanals während einer zyklischen Änderung des Wertes des Parameters während einer vorbestimmten Dauer.

## Claims

1. Process for the storing of digital tuning data and of parameters relating to a plurality of television stations in a reprogrammable memory for the tuning of television receiver appliances, **characterized in that** it comprises the steps of:
(a) following the actuation of a key, initialization of a search for stations by scanning the reception frequency span;
(b) halting of scanning at a current frequency on detection of a station reception signal and execution of steps (c) to (e) for at least one reception parameter of the relevant station:
(c) cyclic changing of the value of the parameter during a given time interval (DT) or until actuation of the said key;
(d) if there has been actuation of the said key during the time interval, storage of the value of the parameter at the moment of the actuation of the key;
(e) if there has not been actuation of the said key during the time interval, resumption if appropriate of the scanning of the frequency span;
(f) return to step (b).

2. Process according to Claim 1, **characterized in that** the actuation of the key during the choosing of the value of the last parameter of a station causes the enabling of the storage of the set of parameters relating to a station.

3. Process according to one of Claims 1 or 2, **characterized in that** the storage of the parameters relating to a station is performed in locations which increment automatically.

4. Process according to one of Claims 1 or 2, **characterized in that** the storage of the parameters relating to a station is performed in a location chosen with the aid of programme selection keys.

5. Television receiver such as a television or a video recorder comprising a reprogrammable memory for the storage of television station reception parameters and a circuit for selecting reception parameters from this memory, **characterized in that** it comprises a single key for on the one hand the initialization of a search for television stations by scanning the reception frequency span and on the other hand the enabling of values of at least one parameter relating to the signal of a station during a cyclic changing of the value of the parameter for a specified duration.
